# EUROPEAN PATENT APPLICATION

(11) **EP 4 129 941 A1**
(43) Date of publication of application: **08.02.2023**
(21) Application number: 21782335.0
(22) Date of filing: 25.03.2021
(51) Int. Cl.: C03C 3/062, C03C 3/064, C03C 3/066, C03C 3/068, C03C 3/12

(54) **GLASS AND GLASS-CONTAINING ARTICLE**

(30) Priority: 31.03.2020 JP 2020064876; 23.10.2020 JP 2020178263
(71) Applicant: HOYA CORPORATION, Shinjuku-ku Tokyo 160-8347 (JP)
(72) Inventor: TACHIWANA, Kazuo, Tokyo 160-8347 (JP); MUTO, Hideki, Tokyo 160-8347 (JP)
(74) Representative: Schaumburg und Partner Patentanwälte mbB
(86) International application number: PCT/JP2021/012476
(87) International publication number: WO 2021/200531

(57) **Abstract**

Provided is a glass (excluding, however, glass used for optical elements selected from the group consisting of lenses and prisms and glass used for optical fibers) that has an oxide-basis glass composition based on a mass basis of a SiO₂ content of 0 to 25%, a B₂O₃ content of 0 to 35%, a P₂O₅ content of 0 to 30%, a total content of SiO₂, B₂O₃, and P₂O₅ (SiO₂ + B₂O₃ + P₂O₅) of 10 to 45%, an Al₂O₃ content of 0 to 15%, a Li₂O content of 0 to 2%, a Na₂O content of 0 to 10%, a K₂O content of 0 to 10%, a Rb₂O content of 0 to 5%, a Cs₂O content of 0 to 5%, a total content of Li₂O, Na₂O, K₂O, Rb₂O, and Cs₂O (Li₂O + Na₂O + K₂O + Rb₂O + Cs₂O) of 0 to 15%, a MgO content of 0 to 20%, a CaO content of 0 to 25%, a SrO content of 0 to 25%, a BaO content of 0 to 30%, a ZnO content of 0 to 60%, a La₂O₃ content of 0 to 50%, an Y₂O₃ content of 0 to 15%, a Gd₂O₃ content of 0 to 25%, an Yb₂O₃ content of 0 to 10%, a CeO₂ content of 0 to 10%, a ZrO₂ content of 0 to 15%, a TiO₂ content of 0 to 20%, a SnO₂ content of 0 to 10%, a Nb₂O₅ content of 0 to 30%, a Ta₂O₅ content of 0 to 15%, a WO₃ content of 0 to 15%, a Bi₂O₃ content of 0 to 20%, a Ga₂O₃ content of 0 to 5%, an In₂O₃ content of 0 to 5%, a GeO₂ content of 0 to 5%, an Sb₂O₃ content of 0 to 1%, a total content of ZnO, MgO, CaO, SrO, BaO, Y₂O₃, La₂O₃, Gd₂O₃, ZrO₂, TiO₂, Al₂O₃, Nb₂O₅, Ta₂O₅, WO₃, and Bi₂O₃ (ZnO + MgO + CaO + SrO + BaO + Y₂O₃ + La₂O₃ + Gd₂O₃ + ZrO₂ + TiO₂ + Al₂O₃ + Nb₂O₅ + Ta₂O₅ + WO₃ + Bi₂O₃) of 55 to 90%, an Fe₂O₃ content of 0 to 10%, a total content of V₂O₅, Cr₂O₃, MnO₂, Co₂O₃, NiO, CuO, MoO, Au₂O₃ and Ag₂O (V₂O₅ + Cr₂O₃ + MnO₂ + Co₂O₃ + NiO + CuO + MoO + Au₂O₃ + Ag₂O) of 0 to 3%, and has a wetting angle to water of 60° or more.

## Description

### [Technical field]

The present invention relates to glass and an article including the glass.

### [Background Art]

Glass is used for various articles to take advantage of physical properties thereof (for example, transparency, chemical, mechanical, and thermal stability, and the like). Meanwhile, although articles with high water repellency are desired in various fields, glass is generally known as a substance that easily gets wet and has low water repellency. Therefore, in articles that require water repellency, water repellency has been imparted by forming a water-repellent coating on the glass surface or by subjecting the glass surface to fine unevenness processing (see, for example, PTL 1).

### [Citation List]

### [Patent Literature]

[PTL 1] Japanese Patent Application Publication No. 2017-001327

### [Summary of Invention]

### [Technical Problem]

As an example, for the windshield of a car, it is important to improve the water repellency of the windshield surface so that the adhered water droplets can be easily removed in order to ensure driver's visibility. For example, for tableware, high water repellency is desirable from the viewpoint of suppressing the adhesion of water scale. Also, for measuring cylinders and the like, the meniscus caused by the high wettability of glass makes accurate metering of water difficult.

However, when imparting water repellency by conventional methods such as those described above (formation of a water-repellent coating, fine unevenness processing, and the like), it is difficult to make the most of the physical properties of glass as they are. In addition, for example, in imparting water repellency by forming a water-repellent coating, it is not easy to form a coating film with high durability of water repellency and excellent homogeneity. Meanwhile, where the water repellency of glass itself can be enhanced, the performance of various water-repellent articles can be enhanced by taking advantage of excellent physical properties of glass. However, no method for enhancing the water repellency of glass itself has heretofore been disclosed, and glass having high water repellency has not been put to practical use.

An object of one aspect of the present invention is to provide a glass having high water repellency.

### [Solution to Problem]

One aspect of the present invention relates to a glass (excluding, however, glass used for optical elements selected from the group consisting of lenses and prisms and glass used for optical fibers) that has an oxide-basis glass composition based on a mass basis of:
a SiO₂ content of 0 to 25%,
a B₂O₃ content of 0 to 35%,
a P₂O₅ content of 0 to 30%,
a total content of SiO₂, B₂O₃, and P₂O₅ (SiO₂ + B₂O₃ + P₂O₅) of 10 to 45%,
an Al₂O₃ content of 0 to 15%,
a Li₂O content of 0 to 2%,
a Na₂O content of 0 to 10%,
a K₂O content of 0 to 10%,
a Rb₂O content of 0 to 5%,
a Cs₂O content of 0 to 5%,
a total content of Li₂O, Na₂O, K₂O, Rb₂O, and Cs₂O (Li₂O + Na₂O + K₂O + Rb₂O + Cs₂O) of 0 to 15%,
a MgO content of 0 to 20%,
a CaO content of 0 to 25%,
a SrO content of 0 to 25%,
a BaO content of 0 to 30%,
a ZnO content of 0 to 60%,
a La₂O₃ content of 0 to 50%,
an Y₂O₃ content of 0 to 15%,
a Gd₂O₃ content of 0 to 25%,
an Yb₂O₃ content of 0 to 10%,
a CeO₂ content of 0 to 10%,
a ZrO₂ content of 0 to 15%,
a TiO₂ content of 0 to 20%,
a SnO₂ content of 0 to 10%,
a Nb₂O₅ content of 0 to 30%,
a Ta₂O₅ content of 0 to 15%,
a WO₃ content of 0 to 15%,
a Bi₂O₃ content of 0 to 20%,
a Ga₂O₃ content of 0 to 5%,
an In₂O₃ content of 0 to 5%,
a GeO₂ content of 0 to 5%,
an Sb₂O₃ content of 0 to 1%,
a total content of ZnO, MgO, CaO, SrO, BaO, Y₂O₃, La₂O₃, Gd₂O₃, ZrO₂, TiO₂, Al₂O₃, Nb₂O₅, Ta₂O₅, WO₃, and Bi₂O₃ (ZnO + MgO + CaO + SrO + BaO + Y₂O₃ + La₂O₃ + Gd₂O₃ + ZrO₂ + TiO₂ + Al₂O₃ + Nb₂O₅ + Ta₂O₅ + WO₃ + Bi₂O₃) of 55 to 90%,
an Fe₂O₃ content of 0 to 10%,
a total content of V₂O₅, Cr₂O₃, MnO₂, Co₂O₃, NiO, CuO, MoO, Au₂O₃ and Ag₂O (V₂O₅ + Cr₂O₃ + MnO₂ + Co₂O₃ + NiO + CuO + MoO + Au₂O₃ + Ag₂O) of 0 to 3%, and has
a wetting angle to water of 60° or more.

In addition, one aspect of the present invention relates to an article including a glass. The article is selected from the group consisting of window materials, windshields, cover glass, mirrors, tableware, laboratory equipment, cooking utensils, washbasins, toilet bowls, tombstones, accessories, handicrafts, glass fibers, and glass fiber moldings, wherein the glass has the above glass composition and has a wetting angle to water of 60° or more.

### [Effects of Invention]

According to one aspect of the present invention, it is possible to provide a glass having high water repellency and an article containing the glass having high water repellency.

### [Brief Description of Drawings]

[Fig. 1] Fig. 1 shows a spectral transmittance curve obtained for the glass of Example 40.
[Fig. 2] Fig. 2 shows a spectral transmittance curve obtained for the glass of Example 41.
[Fig. 3] Fig. 3 shows a spectral transmittance curve obtained for the glass of Example 42.
[Fig. 4] Fig. 4 shows a spectral transmittance curve obtained for the glass of Example 43.
[Fig. 5] Fig. 5 shows a spectral transmittance curve obtained for the glass of Example 44.
[Fig. 6] Fig. 6 shows a spectral transmittance curve obtained for the glass of Example 45.
[Fig. 7] Fig. 7 shows a spectral transmittance curve obtained for the glass of Example 46.
[Fig. 8] Fig. 8 shows a spectral transmittance curve obtained for the glass of Example 47.

### [Description of Embodiments]

### [Glass]

The above glass will be described in more detail hereinbelow.

Regarding the water repellency of glass, for example, it is said that soda-lime glass, which is widely used for window glass, bottle glass, and the like, has the wetting angle to water of 40° or less. Soda-lime glass is glass including about 70 mass% of SiO₂. In addition, in hard glass used for tableware, equipment for chemical experiments, and the like, the SiO₂ content is more than 70 mass%. Thus, SiO₂ is generally used as a network former in glass that has been conventionally used for articles for which water repellency is desired. For this reason, even if modifying oxides are changed to a certain degree, it causes only a minute difference in the surface energy, so the concept of "glass = hydrophilicity" has been generally established. Hydrophilicity and repellency with respect to water are determined by the surface free energy of a substance. Water repellency is achieved by not inhibiting the surface tension of water, but SiO₂, which is a glass-forming oxide, has a relatively large surface energy, which increases the wettability by water.

Meanwhile, it is possible to introduce various components into glass. For example, various compositions of glass have been used in the past as optical glass that requires unique refractive index characteristics for lenses and prisms, and for example, glass including B₂O₃ or P₂O₅, instead of SiO₂, as a network former has been used. In optical glass, an antireflection coating is applied to reduce reflection on the surface. Also, joining lenses with different characteristics has been performed. In this case no special adjustments to the surface properties of the glass itself are required. For this reason, water repellency is not required for optical glass and has not been studied.

Meanwhile, in the course of repeated studies, the present inventors obtained new knowledge that adjusting the glass composition greatly changes the wettability of glass. Specifically, it was found that the wettability of glass can be adjusted by adjusting the content of components that greatly affect the wettability. More specifically, it was made clear that the wettability of glass can be adjusted by including a large amount of components that lower the surface energy, have low reactivity with water, and have low solubility, or conversely, by suppressing the content of components that have a large surface energy, a high polarity and a large chemical reactivity with water. As a result of further extensive studies based on the composition adjustment method enhancing the water repellency of glass that was found in this way, the present inventors have obtained a glass having high water repellency and suitable for practical use, that is, the glass described above.

The glass will be described in more detail hereinbelow.

### <Glass Composition>

In the present invention and the description thereof, the glass composition is expressed on an oxide basis with respect to the cationic components of the glass. Here, the term "oxide-basis glass composition" is considered to refer to a glass composition obtained by conversion assuming that glass raw materials are all decomposed during melting and exist as oxides in the glass. In addition, unless otherwise specified, the glass composition is expressed on a mass basis (mass%, mass ratio).

Regarding various components that make up the glass, the content of each element (mass% of each element) contained in the glass can be quantified by a known method such as inductively coupled plasma atomic emission spectrometry (ICP-AES), inductively coupled plasma mass spectrometry (ICP-MS), and the like. The content of each element in mol% representation can be obtained by dividing the content of the element (mass% of the element) by the atomic weight, and the content in the glass composition in terms of oxide (unit: mass%) can be calculated by using this value.

The anion components contained in the glass can be identified and quantified by known analytical methods such as ion chromatography, non-dispersive infrared absorption (ND-IR), and the like. The content of anion components other than oxygen can be determined as anion% content by a known method. "Anion%" is a value calculated by "[(the number of anions of interest)/(the total number of anions of glass components)] × 100", and means the molar percentage of the amount of anions of interest in the total amount of anions. Meanwhile, in the present invention and the description thereof, when anion components other than oxygen are not detected by analysis by a known method, all of the anion components (that is, 100 anion%) are assumed to be oxygen ions. Meanwhile, when one or more other anion components are detected in addition to oxygen by analysis by a known method, the content (unit: anion%) calculated by the following method from the valence and content in cation% of the cationic components contained in the glass and the valence and content in anion% of the anion components other than oxygen is adopted as the content of oxygen. That is, the sum of "valence × content" (hereinafter referred to as "total valence of cations") is calculated for the cationic components contained in the glass from the results of identification and quantitative analysis by a known method. For anion components other than oxygen, the sum of "valence × content" (hereinafter, "total valence of anions excluding oxygen") is calculated from the results of identification and quantitative analysis by a known method. From the values calculated in this way, the value calculated as "[(total valence of cations) - (total valence of anions excluding oxygen)]/2" can also be adopted as the content of oxygen (more specifically, the proportion (unit: anion%) of oxygen ions among the anion components). "Cation%" is a value calculated by "(the number of cations of interest)/(the total number of cations of glass components) × 100", and means the molar percentage of the amount of cations of interest in the total amount of cations. For the valence of cation components, the formal valence of each cation is used. The formal valence is the valence necessary for an oxide to maintain electrical neutrality when the valence of the oxygen ion (anion) constituting the oxide for the cations of interest is -2, and can be determined uniquely from the chemical formula of the oxide. In addition, for the valence of anions (for example, the valence of oxygen ions is -2, the valence of fluorine ions is -1, and the valence of chlorine ions is -1), a formal valence based on the idea that each ion accepts electrons and forms a closed-shell structure (for example, a formal valence based on the idea that an oxygen ion accepts two electrons to form a closed-shell structure, and a fluorine ion and a chlorine ion each accept one electron to form a closed-shell structure) is used.

Alternatively, the content of an anion component can also be specified by the content (unit: mass%), in outer percentage, of each element relative to the total content of 100 mass% of the glass composition based on the oxides of the cation components obtained as described above.

In addition, in the present invention and the description thereof, the content of a constituent component being 0%, or the constituent component being not contained or introduced means that this constituent component is not substantially included, and this constituent component is allowed to be contained at a level of unavoidable impurity.

In general, SiO₂-Na₂O-CaO-based glass is used as window glass and container glass. Such glass has a wetting angle to water of about 30° and is generally recognized as a hydrophilic material. In glass including 60% or more of SiO₂, no significant difference in the wetting angle is observed even if other components are adjusted. It is presumed that for this reason, the issue of enhancing the water repellency of the glass itself has not been studied.

Meanwhile, for lenses, prisms and optical fibers, types of glass using network formers other than SiO₂ have been conventionally used, characteristic features of refractive index and refractive index dispersion (change in refractive index depending on the wavelength of light) were created by including various components, and the obtained glass was used for lenses, prisms, optical fibers, and the like.

Anti-reflection coating is often applied to optical glass after grinding and polishing, and water repellency is not required because such glass is rarely in contact with water during use. Therefore, the relationship between water repellency and glass composition has not been studied. For optical fibers, the relationship between water repellency and glass composition has not been studied for similar reasons.

The present inventors have found that the wetting angle to water changes depending on the composition of glass, and as a result of investigating the effect of the difference in composition, it was further found that, for example, B₂O₃-La₂O₃ glass tends to have high water repellency, and conversely, alkaline components and SiO₂ component tend to weaken the water repellency. The present inventors have also found that it is possible to obtain a glass with good chemical resistance to water. That is, it was also found that it is possible to obtain a glass useful for various applications for which both water repellency and practical chemical durability can be achieved on the premise of contact with water.

In the above glass, the main component of the network former may be any of SiO₂, B₂O₃, and P₂O₅. B₂O₃ is particularly effective because a large amount of La₂O₃ that will be described hereinbelow can be contained. From the viewpoint of suppressing deterioration of chemical durability, the B₂O₃ content is 35% or less, preferably 25% or less. In addition, the B₂O₃ content is 0% or more, preferably 8% or more.

From the viewpoint of improving the alkali resistance of the glass, the B₂O₃ content may be 32% or less, 27% or less, 22% or less, 18% or less, or 15% or less.

SiO₂ is effective as a glass network former. From the viewpoint of suppressing a decrease in water repellency, the SiO₂ content is 25% or less, preferably 8% or less. The SiO₂ content is 0% or more, preferably 1% or more.

From the viewpoint of improving the alkali resistance and/or chemical durability of the glass, the SiO₂ content may be 2% or more, 4% or more, 10% or more, 15% or more, or 20% or more.

P₂O₅ is a useful component from the viewpoint of including a large amount of components such as BaO, CaO, and Nb₂O₅, which will be described hereinbelow. The P₂O₅ content is 0% or more and, from the viewpoint of improving chemical durability, 30% or less.

From the viewpoint of improving the alkali resistance of the glass, the P₂O₅ content is preferably 5% or less, more preferably 3% or less.

The total content of SiO₂, B₂O₃ and P₂O₅ (SiO₂ + B₂O₃ + P₂O₅) is in the range of 10% to 45%, preferably in the range of 10% to 40%, and more preferably in the range of 15% to 30%, from the viewpoint of suppressing a decrease in water repellency.

The GeO₂ content is 0% or more. GeO₂ functions as a network former to stabilize glass, but since it is a rare component, the content thereof is 5% or less, preferably 2% or less, and more preferably less than 1%.

The Al₂O₃ content is 0% or more. Since Al₂O₃ is a component capable of strengthening the structure of glass, it is effective in improving chemical durability and mechanical strength. From the viewpoint of suppressing the crystallization tendency for stable production, the Al₂O₃ content is 15% or less.

From the viewpoint of improving the alkali resistance of the glass, the Al₂O₃ content may be more than 0%, 1% or more, or 3% or more.

The Li₂O, Na₂O, K₂O, Rb₂O, and Cs₂O contents are each 0% or more. These are components that lower the melting temperature of glass and promote vitrification. From the viewpoint of suppressing deterioration of water repellency, suppressing deterioration of chemical durability, and suppressing deterioration of mechanical strength, the Li₂O content is 2% or less, the Na₂O content is 10% or less, the K₂O content is 10% or less, the Rb₂O content is 5% or less and the Cs₂O content is 5% or less.

The total content of Li₂O, Na₂O, K₂O, Rb₂O, and Cs₂O (Li₂O + Na₂O + K₂O + Rb₂O + Cs₂O) is in the range of 0 to 20% from the viewpoint of suppressing deterioration of water repellency, suppressing deterioration of chemical durability and suppressing deterioration of mechanical strength. This content is preferably 16% or less, more preferably 9% or less, and still more preferably 6% or less.

From the viewpoint of improving the chemical durability of the glass, the total content of Li₂O, Na₂O, K₂O, Rb₂O, and Cs₂O (Li₂O + Na₂O + K₂O + Rb₂O + Cs₂O) may be 3% or less, 2% or less, 1% or less or 0.3% or less.

The ZnO content is 0% or more, preferably 3% or more, more preferably 5% or more. ZnO is a component that enhances water repellency, and is a component such that stable vitrification can be realized even when the content thereof is large. From the viewpoint of suppressing deterioration of mechanical properties and suppressing deterioration of heat resistance (for example, suppressing a decrease in glass transition point), the ZnO content is 60% or less, preferably 55% or less, and more preferably 35% or less.

In one embodiment, the ZnO content may be 10% or more, 15% or more, 20% or more, 25% or more, 30% or more, 35% or more, 40% or more, or 45% or more.

Further, in one embodiment, the ZnO content may be 40% or less, 32% or less, 24% or less, 16% or less, 8% or less, or 4% or less.

The MgO, CaO, SrO and BaO contents are each 0% or more. These are effective components for stable vitrification with any network former. From the viewpoint of suppressing deterioration of water repellency, the MgO content is 20% or less, the CaO content is 25% or less, the SrO content is 25% or less, and the BaO content is 30% or less.

The La₂O₃ content is 0% or more, preferably 15% or more. La₂O₃ is a component that is highly effective in enhancing water repellency. From the viewpoint of suppressing the crystallization tendency, the La₂O₃ content is 50% or less, preferably 45% or less.

From the viewpoint of improving the alkali resistance of the glass, the La₂O₃ content may be 10% or more, 15% or more, 20% or more, 25% or more, 33% or more, or 40% or more.

The Y₂O₃ and Gd₂O₃ contents are each 0% or more. Y₂O₃ and Gd₂O₃ are components that can bring about effects similar to those of La₂O₃. From the viewpoint of suppressing the crystallization tendency, the Y₂O₃ content is 15% or less, and the Gd₂O₃ content is 25% or less.

From the viewpoint of improving the alkali resistance of the glass, the Y₂O₃ content may be 1% or more, 3% or more, or 4% or more.

From the viewpoint of improving the alkali resistance of the glass, the Gd₂O₃ content may be 1% or more, 3% or more, or 4% or more.

The Yb₂O₃ content is 0% or more. The Yb₂O₃ content can bring about effects similar to those of La₂O₃, Y₂O₃ and Gd₂O₃, but since it is a rare component, the content thereof is 10% or less, preferably 5% or less.

The CeO₂ content is 0% or more. By adding a small amount of CeO₂, an effect of shielding ultraviolet rays can be obtained. It is also possible to adjust the color of the glass by adding small amounts of CeO₂. The CeO₂ content is 5% or less from the viewpoint of suppressing a decrease in devitrification resistance.

The Ga₂O₃ and In₂O₃ contents are each 0% or more. Ga₂O₃ and In₂O₃ can bring about effects similar to those of La₂O₃, Y₂O₃ and Gd₂O₃, but since they are rare components, the contents thereof are each 5% or less.

The ZrO₂ content is 0% or more, preferably 1% or more. ZrO₂ is a component that can greatly improve chemical durability and mechanical strength (for example, hardness) without significantly deteriorating the water repellency. From the viewpoint of suppressing an increase in the crystallization tendency due to an increase in melting temperature, the ZrO₂ content is 15% or less, preferably 8% or less.

Further, the ZrO₂ content may be 2% or more, 4% or more, 5% or more, 6% or more, or 7% or more. This is because ZrO₂ is a particularly useful component for improving the chemical durability and/or alkali resistance of the glass.

The TiO₂ content is 0% or more. TiO₂ is a component that can be contained in a large amount and is a component that can improve chemical durability and mechanical strength. From the viewpoint of suppressing a decrease in transmittance, the TiO₂ content is 20% or less.

Further, the TiO₂ content may be 2% or more, 4% or more, 6% or more, 8% or more, 10% or more, 12% or more, 16% or more, or 20% or more. This is because TiO₂ is a useful component for improving chemical durability and/or alkali resistance of the glass.

The SnO₂ content is 0% or more. SnO₂ is a component that can bring about a clarification effect when added in a small amount. Moreover, it can also act to enhance water repellency. The SnO₂ content is 10% or less from the viewpoint of suppressing a decrease in meltability.

The Nb₂O₅ content is 0% or more, and may be 1% or more, 3% or more, 6% or more, 10% or more, or 14% or more. A large amount of Nb₂O₅ can preferably be included in the glass with a P₂O₅ network, thereby making it possible to provide a water-repellent effect. From the viewpoint of suppressing crystallization tendency, suppressing decrease in transmittance, and reducing cost, the Nb₂O₅ content is 30% or less, and may be 20% or less, 15% or less, or 10% or less.

The Ta₂O₅ content is 0% or more. Adding a small amount of Ta₂O₅ can bring about the effect of enhancing the stability of the glass. The Ta₂O₅ content may be greater than 0%, 1% or more, 3% or more, 6% or more, or 12% or more. From the viewpoint of suppressing the crystallization tendency, the Ta₂O₅ content is 15% or less, and may be 10% or less, 5% or less, or 0%.

The WO₃ content is 0% or more. WO₃ can ensure improved chemical durability when added in a small amount. The WO₃ content may be greater than 0%, 1% or more, 2% or more or 4% or more. From the viewpoint of suppressing the melting temperature rise and crystallization tendency, the WO₃ content is 15% or less, and may be 10% or less, 5% or less, or 0%.

The Bi₂O₃ content is 0% or more. Bi₂O₃ is a component that can enhance meltability without lowering water repellency. From the viewpoint of suppressing a decrease in mechanical strength and a decrease in crystallization tendency, the Bi₂O₃ content is 20% or less, and may be 14% or less, 9% or less, or 4% or less.

From the viewpoint of improving water repellency, the total content of ZnO, MgO, CaO, SrO, BaO, Y₂O₃, La₂O₃, Gd₂O₃, ZrO₂, TiO₂, Al₂O₃, Nb₂O₅, Ta₂O₅, WO₃, and Bi₂O₃ (ZnO + MgO + CaO + SrO + BaO + Y₂O₃ + La₂O₃ + Gd₂O₃ + ZrO₂ + TiO₂ + Al₂O₃ + Nb₂O₅ + Ta₂O₅ + WO₃ + Bi₂O₃) is 55% or more, preferably 60% or more, and more preferably 65% or more. From the viewpoint of suppressing deterioration of glass stability, the total content is 90% or less, preferably 85% or less.

The Fe₂O₃ content is in the range of 0 to 10%, the total content of V₂O₅, Cr₂O₃, MnO₂, Co₂O₃, NiO, CuO, MoO, Au₂O₃, and Ag₂O (V₂O₅ + Cr₂O₃ + MnO₂ + Co₂O₃ + NiO + CuO + MoO + Au₂O₃ + Ag₂O) is in the range of 0 to 3%. By adding, as appropriate, one or more of Fe, V, Cr, Mn, Co, Ni, Cu, Mo, Au, and Ag, which are coloring components, the color of the glass can be adjusted. These can be added as raw materials for glass, usually in the form of oxides or chlorides, during glass production, and glass of various colors can be obtained by coloration adjustment by adjusting the melting temperature and the atmosphere, or performing color development by heat treatment, and the like. Further, as a component that can be added, as appropriate, to adjust the color of the glass, a coloring component such as Nd₂O₃ can be mentioned, and Eu₂O₃, Er₂O₃, Sm₂O₃ and the like can also be mentioned.

The Sb₂O₃ content is 0% or more. Sb₂O₃, which can promote a clarification effect during melting, can be added up to 1%.

The above glass can be obtained by compounding various glass raw materials, melting, and molding. As glass raw materials, oxides, hydrates, phosphates, carbonates, nitrates, sulfates, fluorides and the like can be used. Specific examples of glass raw materials include oxides such as SiO₂, ZnO, La₂O₃ and ZrO₂, hydrates such as H₃BO₃, nitrates such as Sr(NO₃)₂, carbonates such as BaCOs, and the like. Further, for example, glass including fluorine can be obtained by adding fluorides such as ZnF₂, MgF₂, AlF₃, and the like as glass raw materials during glass production. The type and content of the anion component to be introduced into the glass can be adjusted depending on the type and amount of glass raw material. Examples of anion components include oxygen (O²⁻), fluorine (F⁻), chlorine (Cl⁻), and the like. The above glass may include 100 anion% of oxygen (O²⁻) as the anion component, or may contain one or more other anion components in addition to oxygen. For example, introduction of fluorine (F⁻) can contribute to improvement of water repellency. From the viewpoint of suppressing deterioration of melt stability, suppressing deterioration of devitrification resistance, and suppressing deterioration of chemical durability, the fluorine (F) content is preferably 30 anion% or less. As for the content in the above-described outer percentage, the fluorine content is preferably 10 mass% or less. In addition, chlorine (Cl⁻) can be introduced into the glass, for example, by using chlorides such as AuCl₃ and AgCl as glass raw materials.

In one embodiment, the above glass can be amorphous glass, and in another embodiment, it can be crystal-containing glass (crystallized glass). In addition, the above glass can be used as a molded body molded into various shapes such as a plate by any molding method, can be used as a coating film (glass layer), and can be used as a glass powder. The above glass can also be used as a sintered body of glass powder, can be used as a glass fiber, and can also be used as a molded body of glass fibers. However, glasses used for optical elements selected from the group consisting of lenses and prisms and glasses used for optical fibers are not included in the above glass.

### <Physical Properties of Glass>

### (Wetting Angle to Water)

The wetting angle of the above glass to water is 60° or more, preferably 65° or more, more preferably 70° or more, still more preferably 75° or more, and even more preferably 80° or more. In addition, the wetting angle of the above glass to water may be, for example, 120° or less, 110° or less, 100° or less, 98° or less, or 95° or less. However, since the larger the value of the wetting angle to water means more excellent water repellency, it is also preferable that the wetting angle to water exceed the values exemplified above.

In the present invention and the description, the wetting angle of glass to water is a contact angle measured within 30 seconds after dropping 0.1 ml ± 0.02 ml of water on the glass surface in a measurement environment with an atmospheric temperature of 20°C ± 5°C and a relative humidity of 50% ± 20%. The arithmetic mean of the values obtained by three measurements is taken as the wetting angle of the glass to water. The three measurements may be performed at three different locations on the glass surface, or the measurement may be performed repeatedly after removing the water dropped for the previous measurement by drying or the like.

Where the arithmetic mean roughness Ra of the surface of the glass for which the wetting angle is to be measured is 0.2 µm or less, the wetting angle is to be measured on that surface. Where the arithmetic mean roughness Ra of the surface of the glass for which the wetting angle is to be measured exceeds 0.2 µm, the wetting angle to water is to be measured on the polished surface after grinding and polishing so that Ra is 0.2 µm or less. The arithmetic mean roughness Ra is a surface texture parameter defined in JIS B 0601 :2013. The water repellency of the glass itself can be evaluated more accurately by determining the wetting angle to water on the surface having an Ra of 0.2 µm or less.

### (Water Resistance Dw)

In one embodiment, the above glass can also have excellent water resistance. The water resistance can be evaluated by water resistance Dw determined based on the Japan Optical Glass Industry Standard JOGIS-06:2019 "Measuring Method for Chemical Durability of Optical Glass (Powder Method)". In one embodiment, the glass can have a water resistance Dw thus determined of 1 grade.

### (Knoop Hardness Hk)

In one embodiment, the above glass can also have excellent mechanical strength. The mechanical strength can be evaluated, for example, by hardness, and in one example, can be evaluated by Knoop hardness. The hardness of the above glass is, for example, 450 or more, preferably 500 or more, and more preferably 550 or more as the Knoop hardness determined based on the Japan Optical Glass Industry Standard JOGIS-09:2019 "Measuring Method for Knoop Hardness of Optical Glass". The Knoop hardness of the above glass can be, for example, 850 or less, 800 or less, or 750 or less, but may exceed the values exemplified herein. The glass having a high Knoop hardness value is preferable because it is less likely to be scratched.

### (Thermal Characteristics)

As an index of heat resistance, a glass transition temperature Tg can be mentioned. The glass transition temperature Tg is obtained in the following manner. In differential scanning calorimetry, when the temperature of a glass sample is increased, endothermic behavior accompanying a change in specific heat, that is, an endothermic peak appears, and when the temperature is further increased, an exothermic peak appears. In differential scanning calorimetry, a differential scanning calorimetry curve (DSC curve) is obtained, in which the abscissa is a temperature and the ordinate is a quantity corresponding to exotherm and endotherm of the sample. An intersection of a baseline and a tangent line at the point where the slope becomes maximum when an endothermic peak appears from the baseline in the curve is taken as the glass transition temperature Tg. The glass transition temperature Tg can be measured by using a sample obtained by sufficiently pulverizing glass in a mortar or the like, and using a differential scanning calorimeter at a temperature rise rate of 10°C/min. The glass transition temperature Tg of soda-lime glass is about 540°C. In contrast, the above glass can be a glass having a glass transition temperature above 550°C.

In addition, regarding thermal expansion characteristics, the average linear expansion coefficient α is a value measured using a thermomechanical analyzer (TMA; Thermomechanical Analysis) according to JOGIS-16:2019 "Measuring Method for Average Linear Thermal Expansion Coefficient of Optical Glass at around Normal Temperature". A glass having an average linear expansion coefficient α of 70 × 10⁻⁷/°C or less at -30°C to 70°C is preferable in that cracks caused by thermal shock or rapid cooling are less likely to occur. In one embodiment, the above glass can be a glass having an average linear expansion coefficient α of 70 × 10⁻⁷/°C or less at -30°C to 70°C.

For the above glass, desirable physical properties according to the application can be obtained by adjusting, as appropriate, water repellency thereof and also chemical properties, mechanical properties, thermal properties, and the like.

### (Alkali Resistance)

In one embodiment, the above glass can also have excellent alkali resistance. A mass reduction rate obtained by using a sample preparation method described in the Japan Optical Glass Industry Standard JOGIS-06:2019 "Measuring Method for Chemical Durability of Optical Glass (Powder Method)", placing powdered glass (particle size 425 to 600 µm) in a mass equivalent to 1 cubic centimeter of optical glass in a platinum cage and immersing in an aqueous NaOH solution with a concentration of 0.01 mol/l at a liquid temperature of 50°C for 15 hours (referred to hereinbelow as "mass reduction rate in the powder method alkali resistance test") can be used as an index for alkali resistance. In one embodiment, the mass reduction rate of the above glass in the powder method alkali resistance test is preferably 0.10 mass% or less, and more preferably less than 0.02 mass%. For example, by setting the content of the glass component such as P₂O₅ and the like within the range described above, it becomes easier to obtain a glass having excellent alkali resistance.

### [Article]

One aspect of the present invention relates to an article including a glass. The article is selected from the group consisting of window materials, windshields, cover glass, mirrors, tableware, laboratory equipment, cooking utensils, washbasins, toilet bowls, tombstones, accessories, handicrafts, glass fibers and glass fiber moldings, wherein the glass has the above glass composition and has a wetting angle to water of 60° or more. The glass composition and physical properties of the glass contained in the above article are as described above for the glass according to one aspect of the present invention.

The above article is selected from the group consisting of window materials, windshields, cover glass, mirrors, tableware, laboratory equipment, cooking utensils, washbasins, toilet bowls, tombstones, accessories, handicrafts, glass fibers and glass fiber moldings. For example, the above article can include the above glass as part or all of a window material such as window glass for buildings such as houses, showcase glass, show window glass, and the like, a car windshield, a bus windshield, a truck windshield, a windshield, a side glass, and a rear glass for various operators, a train windshield, a train window, an airplane windshield, a helicopter windshield, a drone windshield and cover glass, an airplane window glass, a helicopter window glass, a windshield and a window glass for ships such as high-speed ships and the like, a glass mirror, a mirror having a glass-containing layer as a surface layer, glass tableware, glass laboratory equipment, glass cookware, a washbasin, a toilet bowl, a tombstone, an accessory such as a necklace, an earring, a piercing earring, a ring, and the like, a handicrafts installed outdoors or indoors, cover glass for various articles installed outdoors or indoors such as an optical device, a glass fiber molding, and the like. In one embodiment, the above article can be an article having a surface layer including the above glass.

For example, glass with excellent water repellency is most effective for automobile windshields.

A high water repellency and sliding properties make it possible to easily remove raindrops even when driving at low speeds.

In addition, the wiper slides better, and the durability of the wiper itself can be improved along with ensuring quieter operation. By using glass with excellent water repellency for windshields of automobiles and the like, it is possible to stably obtain comfortable vision for a long period of time. These effects are also advantageous for side windows, rear windows, side mirrors, window materials for monitor cameras, and the like.

Water deposits are considered to be a phenomenon that occurs due to the bonding between the Si component contained in tap water etc. and SiO₂-based glass. In one embodiment, the above glass can be a glass that has low reactivity with Si, thereby suppressing the occurrence of water deposits.

The above glass tends to have a higher specific gravity than soda-lime glass, so the total weight tends to be larger, but it can be advantageous in terms of improved sound insulation.

In addition, glass with excellent water repellency can also be used as a window material for trains and airplanes. Glass excellent in water repellency is also effective in improving visibility in rainy weather as a window material for general buildings, and can also reduce residual dirt, so such glass is preferable from the standpoint of enabling long-term use. Further, by reducing the content of coloring components exemplified above, a glass with high transmittance and little coloring can be obtained.

In addition, glass with excellent water repellency and water resistance is suitable for bathroom mirrors. Droplets are unlikely to remain, and good viewing property and excellent performance even after long-term use can be maintained. Such glass is also effective in a visual mirror installed outdoors. In one embodiment, from the viewpoint of water resistance, it is preferable that the B₂O₃ content be 25% or less.

For example, using general soda-lime glass as a base, melting and dipcoating the above glass thereon, and performing predetermined slow cooling, it is possible to impart water repellency to the surface of glass of various shapes. Since the above glass can be a glass with a small surface free energy, the strength of adhesion to various substances can be reduced. A surface with a small free energy is smooth to the touch, less susceptible to fingerprint marks, and facilitates the removal of adherents. Due to this property, the glass can be used as a window material for fingerprint authentication devices, a cover glass for smartphones, and the like. In addition, the above glass can be used for tableware and containers, and since water is easily removed after washing, the above glass is effective in reducing cleaning load and improving hygiene. In addition, in one embodiment, the above glass can be a glass with a relatively high refractive index and high light dispersion. When such glass is used for a drinking glass, a glittering brilliance can be obtained. In addition, since glass with high hardness is less likely to be scratched, long-term transparency can be obtained. Glass with a relatively high specific gravity is advantageous in providing an article with a strong solid feeling. Glass with a small thermal expansion can reduce the occurrence of cracks due to rapid temperature changes. In one embodiment of the above glass, glass having a total content of ZnO and La₂O₃ (ZnO + La₂O₃) of 60% or more tends to have lower thermal conductivity and specific heat than soda-lime glass. Glass with low thermal conductivity and low specific heat has a strong heat-retaining effect and is effective in reducing the temperature difference at the moment of contact.

Further, for teapots and the like, a high water repellency of the surface is effective in reducing dripping when pouring hot water. A high water repellency of the surface of a tumbler or coffee cup can also reduce dripping.

In one embodiment, the surface of the above glass can be surface-processed according on the application. For example, water wetting can be further suppressed by subjecting the surface to abrasion processing with #60, #320, #800, #1200 abrasive grains or the like, or by subjecting the surface to softening press processing to impart fine unevenness to the surface. It can also provide excellent water repellency to a frosted glass material for windows.

In addition, a colored article having water repellency can be obtained by adding, as appropriate, a coloring component to the above glass.

In one embodiment, the above glass can be a crystal-containing glass. Crystal-containing glass is also generally called crystallized glass and is less likely to break because such glass tends to be more resistant to cracking than amorphous glass materials. By adjusting the glass composition and crystallization conditions, it is possible to obtain a crystal-containing glass that is useful as a building material such as exterior walls, flooring material, and roofing material having desired water repellency, mechanical strength, and chemical durability. In addition, by using the crystal-containing glass in toilet bowls, washbasins, and the like, it is possible to obtain the effect of reducing adhesion of dirt and scale.

In one embodiment, the above glass can have a higher refractive index than soda-lime glass. Glass with a high refractive index is characterized by high reflection of light. Such glass is preferred as decorative glass for outdoor displays.

The above glass can be colored, as appropriate, and durability thereof can be improved by adjusting the composition. Where such glass is used for a tombstone, the dirt is unlikely to adhere, cleaning is facilitated, and the tombstone can be kept clean for a long time.

In addition, a water-repellent coat can be formed by using the above glass as a powder material and applying it to various materials. In addition, such a coat can contribute to improving heat resistance in addition to improving water repellency.

In enameled products that use crystallized glass powder as an enamel, the sticking of scorched material can be suppressed.

With glass having excellent water repellency, entry of water into narrow gaps due to capillary action can be suppressed, and by adjusting the glass composition according to the target liquid, it is also possible to adjust the surface tension, liquid wetting, and penetration.

In physical and chemical laboratory equipment such as glass measuring cylinders, burettes, and measuring flasks, the wetting-up of the meniscus can make it difficult to see the scale, making it difficult to measure accurately, but with a glass excellent in water repellency accurate weighing becomes possible. In this case, it is particularly preferable that the wetting angle to water be about 90° (for example, about 85° to 95°). This also applies to measuring instruments for cooking, which are a kind of cooking utensils.

The fiber-molded glass and fibers made therefrom can be used for various molded bodies such as ships, high-insulation glass-wool insulation materials, and the like, due to resistance to wetting with water.

Glass fibers made of glass with excellent alkali resistance are useful as glass fibers for reinforcing cement. In addition, since glass having excellent alkali resistance is highly resistant to alkaline soap water, such glass is also useful as a material for glass bathroom mirrors, a material for the surface layer of bathroom mirrors, and the like.

### [Examples]

The present invention will be described in more detail below by way of Examples. However, the present invention is not limited to Examples.

For Examples 1 to 47 and Comparative Examples 1 to 5, raw materials for introducing each component were weighed so as to obtain the glass compositions shown in Table 1 below (Tables 1-1 to 1-4) and mixed thoroughly to form a compounded raw material. Except for Example 8, oxides of each component were used as raw materials. In Example 8, ZnO and ZnF₂ were used as Zn raw materials, and oxides of each component were used as other raw materials.

Glass plates were produced by melting 100 g to 200 g of the compounded raw material at 1200°C to 1400°C by using a platinum crucible, pouring the melt into an iron mold, molding and then annealing.

The glass constituting the glass plates of Examples 12, 22, 26, and 28 is crystal-containing glass, and the glass constituting the glass plates of other Examples is amorphous glass.

For the prepared glass plates, the wetting angle to water, water resistance Dw, and Knoop hardness Hk were determined by the methods described above.

For the glass plates of Examples 1 to 39, the mass reduction rate in the powder method alkali resistance test was determined by the method described above.

Further, when the sliding property of water was measured in a measurement environment with an atmospheric temperature of 20°C ± 5°C and a relative humidity of 50% ± 20% for the glass plate of Example 10, it was confirmed that a water droplet of 0.1 ml slid down at the inclination angle (water sliding angle) of the surface of the glass plate with respect to the horizontal plane of 40°.

In the tables below, the unit of content is mass%. In addition, "A" indicates the total content of SiO₂, B₂O₃ and P₂O₅ (SiO₂ + B₂O₃ + P₂O₅), "B" indicates the total content of ZnO, MgO, CaO, SrO, BaO, Y₂O₃, La₂O₃, Gd₂O₃, ZrO₂, TiO₂, Al₂O₃, Nb₂O₅, Ta₂O₅, WO₃, and Bi₂O₃ (ZnO + MgO + CaO + SrO + BaO + Y₂O₃ + La₂O₃ + Gd₂O₃ + ZrO₂ + TiO₂ + Al₂O₃ + Nb₂O₅ + Ta₂O₅ + WO₃ + Bi₂O₃), and "C" indicates the total content of Li₂O, Na₂O, K₂O, Rb₂O, and Cs₂O (Li₂O + Na₂O + K₂O + Rb₂O + Cs₂O).

In addition, in the tables below, the numerical value described in "Dw" indicates the grade of Dw. That is, "1" indicates 1st grade, and "3" indicates 3rd grade.

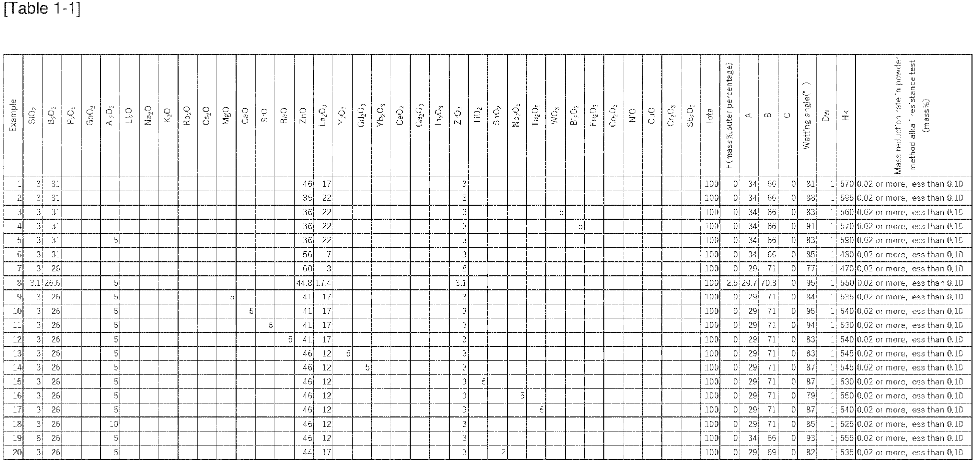

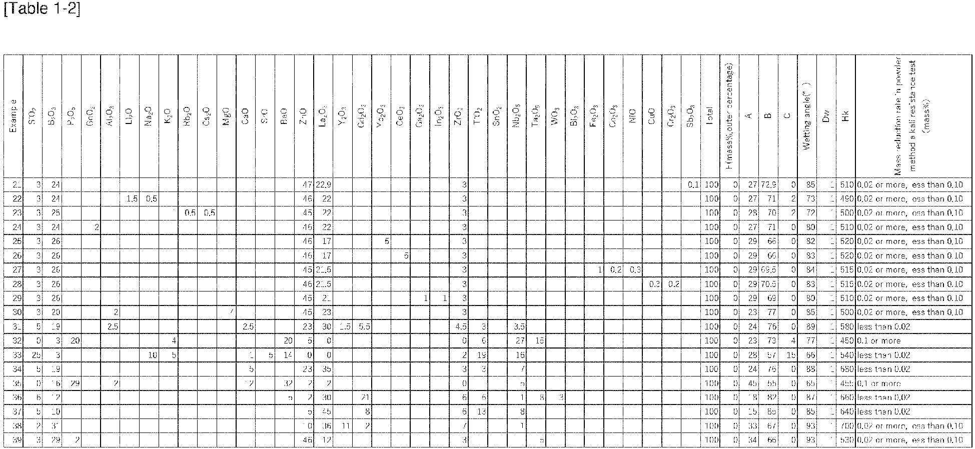

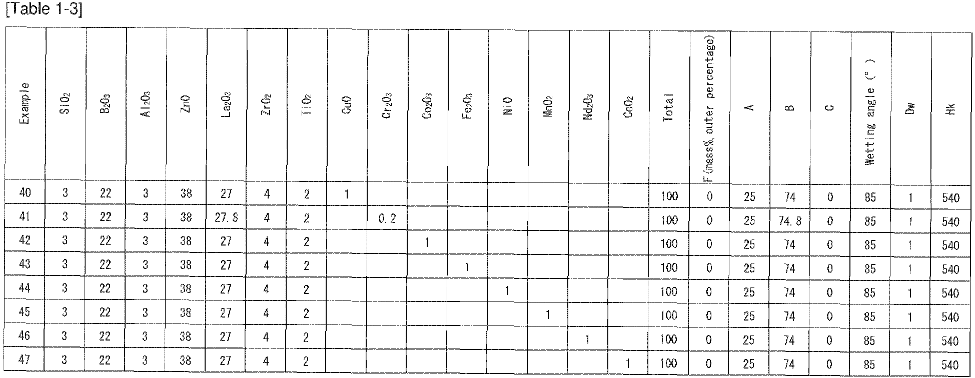

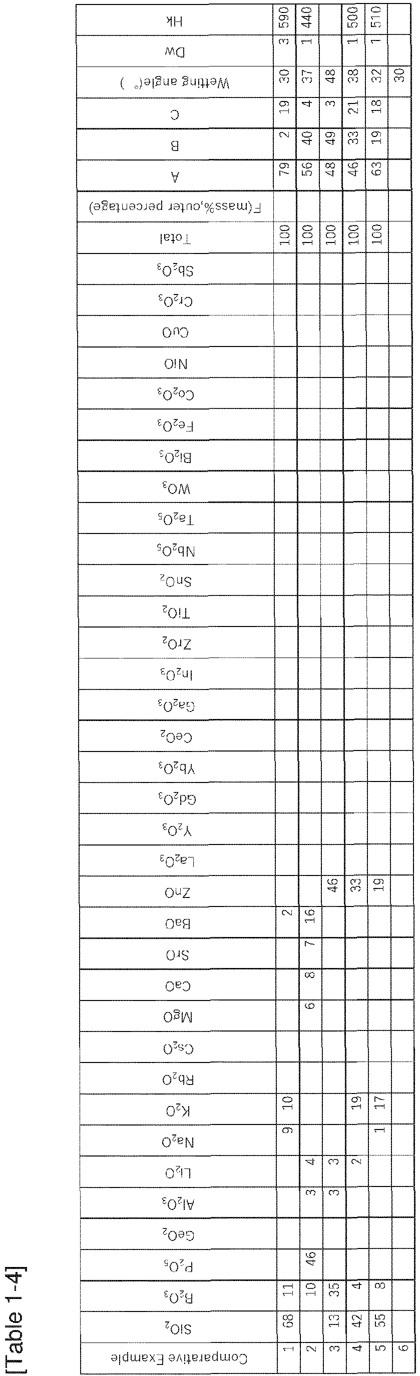

As shown in Table 1, the glass of all the Examples had a wetting angle to water of 60° or more.

As Reference Example 1, the wetting angle to water was similarly determined for stainless steel SUS304, and it was 68°.

As Reference Example 2, PTFE (polytetrafluoroethylene), which is generally considered to be a water-repellent material, was found to have a wetting angle to water of 90°.

From the above results, it can be confirmed that the glass of the Examples has excellent water repellency similar to materials known as materials with high water repellency.

Comparative Example 1 is an optical glass with SiO₂ exceeding 60% (material equivalent to BSC7 manufactured by HOYA Corporation). The SiO₂ content is high, and the total content of Li₂O, Na₂O, K₂O, Rb₂O, and Cs₂O (Li₂O + Na₂O + K₂O + Rb₂O + Cs₂O) is also high.

In the glass composition of Comparative Example 2, the P₂O₅ content is high, and the total content of SiO₂, B₂O₃ and P₂O₅ (SiO₂ + B₂O₃ + P₂O₅) is also high.

In the glass composition of Comparative Example 3, the total content of SiO₂, B₂O₃ and P₂O₅ (SiO₂ + B₂O₃ + P₂O₅) is high.

In the glass composition of Comparative Example 4 and the glass composition of Comparative Example 5, a total content of ZnO, MgO, CaO, SrO, BaO, Y₂O₃, La₂O₃, Gd₂O₃, ZrO₂, TiO₂, Al₂O₃, Nb₂O₅, Ta₂O₅, WO₃, and Bi₂O₃ (ZnO + MgO + CaO + SrO + BaO + Y₂O₃ + La₂O₃ + Gd₂O₃ + ZrO₂ + TiO₂ + Al₂O₃ + Nb₂O₅ + Ta₂O₅ + WO₃ + Bi₂O₃) is small.

Comparative Example 6 is a commercially available soda-lime glass with a SiO₂ content exceeding 70% and a large total content of Li₂O, Na₂O, K₂O, Rb₂O, and Cs₂O (Li₂O + Na₂O + K₂O + Rb₂O + Cs₂O).

The glass of Comparative Examples 1 to 6 having the above glass compositions had a wetting angle to water of less than 60° and was inferior in water repellency to the glass of the Examples.

It was also confirmed that the glass of all the Examples had a mass reduction rate in the powder method alkali resistance test of 0.10 mass% or less and was excellent in alkali resistance. When the powder method alkali resistance test was also performed on soda-lime glass, which is generally used as a window material, the mass reduction rate was 0.25 mass%.

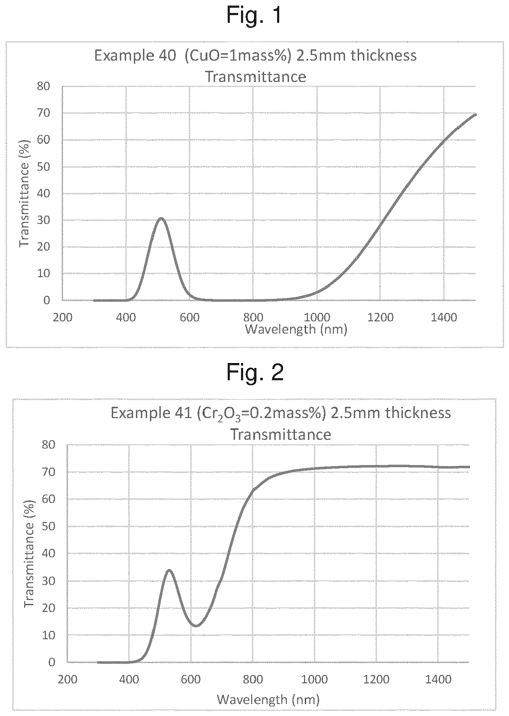

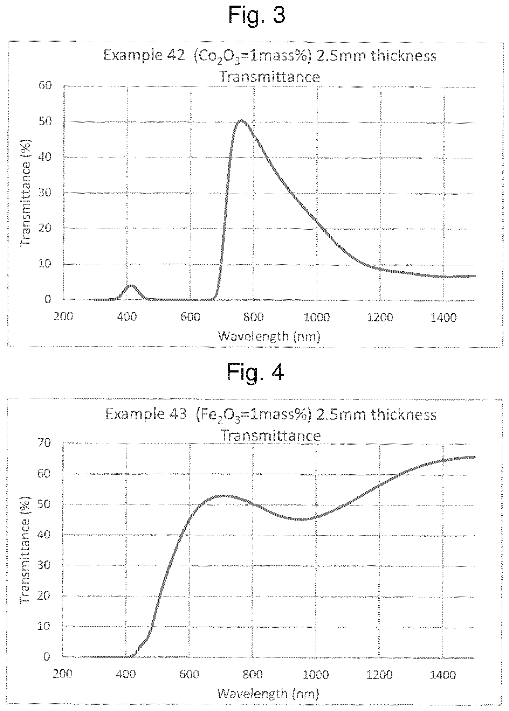

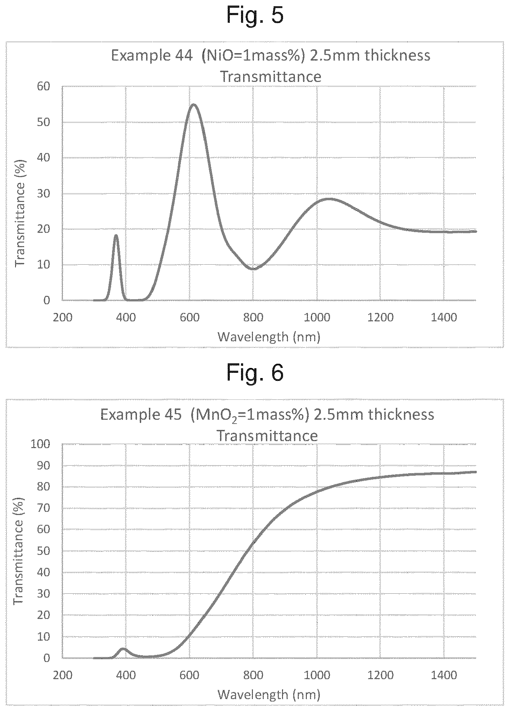

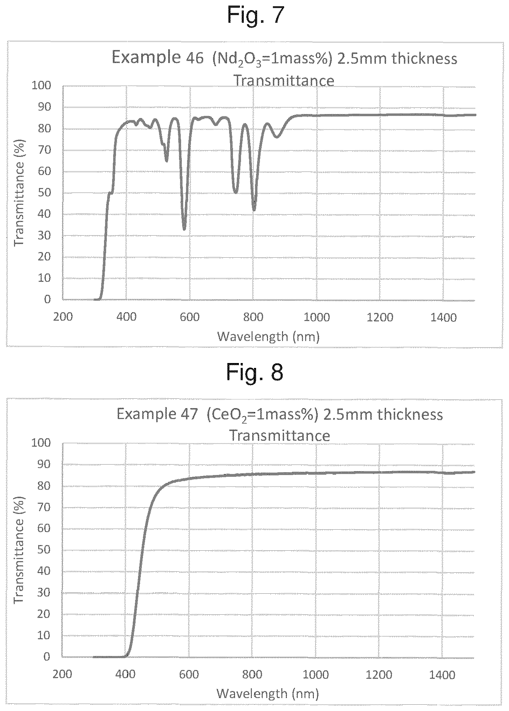

For the glass of Examples 40 to 47, glass plates with a thickness of 2.5 mm were produced by the above method, and the spectral transmittance of the produced glasses was measured to obtain spectral transmittance curves (Figs. 1 to 8).

From the spectral transmittance curves shown in Figs. 1 to 8, it can be seen that the absorption characteristics of the glass can be variously changed by adding components useful for color adjustment, that is, it can be confirmed that the color of the glass can be easily adjusted.

Finally, the aforementioned embodiments are summarized hereinbelow.

One aspect provides a glass (excluding, however, glass used for optical elements selected from the group consisting of lenses and prisms and glass used for optical fibers) that has an oxide-basis glass composition based on a mass basis of a SiO₂ content of 0 to 25%, a B₂O₃ content of 0 to 35%, a P₂O₅ content of 0 to 30%, a total content of SiO₂, B₂O₃, and P₂O₅ (SiO₂ + B₂O₃ + P₂O₅) of 10 to 45%, an Al₂O₃ content of 0 to 15%, a Li₂O content of 0 to 2%, a Na₂O content of 0 to 10%, a K₂O content of 0 to 10%, a Rb₂O content of 0 to 5%, a Cs₂O content of 0 to 5%, a total content of Li₂O, Na₂O, K₂O, Rb₂O, and Cs₂O (Li₂O + Na₂O + K₂O + Rb₂O + Cs₂O) of 0 to 15%, a MgO content of 0 to 20%, a CaO content of 0 to 25%, a SrO content of 0 to 25%, a BaO content of 0 to 30%, a ZnO content of 0 to 60%, a La₂O₃ content of 0 to 50%, an Y₂O₃ content of 0 to 15%, a Gd₂O₃ content of 0 to 25%, an Yb₂O₃ content of 0 to 10%, a CeO₂ content of 0 to 10%, a ZrO₂ content of 0 to 15%, a TiO₂ content of 0 to 20%, a SnO₂ content of 0 to 10%, a Nb₂O₅ content of 0 to 30%, a Ta₂O₅ content of 0 to 15%, a WO₃ content of 0 to 15%, a Bi₂O₃ content of 0 to 20%, a Ga₂O₃ content of 0 to 5%, an In₂O₃ content of 0 to 5%, a GeO₂ content of 0 to 5%, an Sb₂O₃ content of 0 to 1%, a total content of ZnO, MgO, CaO, SrO, BaO, Y₂O₃, La₂O₃, Gd₂O₃, ZrO₂, TiO₂, Al₂O₃, Nb₂O₅, Ta₂O₅, WO₃, and Bi₂O₃ (ZnO + MgO + CaO + SrO + BaO + Y₂O₃ + La₂O₃ + Gd₂O₃ + ZrO₂ + TiO₂ + Al₂O₃ + Nb₂O₅ + Ta₂O₅ + WO₃ + Bi₂O₃) of 55 to 90%, an Fe₂O₃ content of 0 to 10%, a total content of V₂O₅, Cr₂O₃, MnO₂, Co₂O₃, NiO, CuO, MoO, Au₂O₃ and Ag₂O (V₂O₅ + Cr₂O₃ + MnO₂ + Co₂O₃ + NiO + CuO + MoO + Au₂O₃ + Ag₂O) of 0 to 3%, and has a wetting angle to water of 60° or more.

The above glass can exhibit excellent water repellency.

One aspect provides an article including a glass. The article is selected from the group consisting of window materials, windshields, cover glass, mirrors, tableware, laboratory equipment, cooking utensils, washbasins, toilet bowls, tombstones, accessories, handicrafts, glass fibers, and glass fiber moldings. The glass has an oxide-basis glass composition based on a mass basis of a SiO₂ content of 0 to 25%, a B₂O₃ content of 0 to 35%, a P₂O₅ content of 0 to 30%, a total content of SiO₂, B₂O₃, and P₂O₅ (SiO₂ + B₂O₃ + P₂O₅) of 10 to 45%, an Al₂O₃ content of 0 to 15%, a Li₂O content of 0 to 2%, a Na₂O content of 0 to 10%, a K₂O content of 0 to 10%, a Rb₂O content of 0 to 5%, a Cs₂O content of 0 to 5%, a total content of Li₂O, Na₂O, K₂O, Rb₂O, and Cs₂O (Li₂O + Na₂O + K₂O + Rb₂O + Cs₂O) of 0 to 15%, a MgO content of 0 to 20%, a CaO content of 0 to 25%, a SrO content of 0 to 25%, a BaO content of 0 to 30%, a ZnO content of 0 to 60%, a La₂O₃ content of 0 to 50%, an Y₂O₃ content of 0 to 15%, a Gd₂O₃ content of 0 to 25%, an Yb₂O₃ content of 0 to 10%, a CeO₂ content of 0 to 10%, a ZrO₂ content of 0 to 15%, a TiO₂ content of 0 to 20%, a SnO₂ content of 0 to 10%, a Nb₂O₅ content of 0 to 30%, a Ta₂O₅ content of 0 to 15%, a WO₃ content of 0 to 15%, a Bi₂O₃ content of 0 to 20%, a Ga₂O₃ content of 0 to 5%, an In₂O₃ content of 0 to 5%, a GeO₂ content of 0 to 5%, an Sb₂O₃ content of 0 to 1%, a total content of ZnO, MgO, CaO, SrO, BaO, Y₂O₃, La₂O₃, Gd₂O₃, ZrO₂, TiO₂, Al₂O₃, Nb₂O₅, Ta₂O₅, WO₃, and Bi₂O₃ (ZnO + MgO + CaO + SrO + BaO + Y₂O₃ + La₂O₃ + Gd₂O₃ + ZrO₂ + TiO₂ + Al₂O₃ + Nb₂O₅ + Ta₂O₅ + WO₃ + Bi₂O₃) of 55 to 90%, an Fe₂O₃ content of 0 to 10%, a total content of V₂O₅, Cr₂O₃, MnO₂, Co₂O₃, NiO, CuO, MoO, Au₂O₃ and Ag₂O (V₂O₅ + Cr₂O₃ + MnO₂ + Co₂O₃ + NiO + CuO + MoO + Au₂O₃ + Ag₂O) of 0 to 3%, and has a wetting angle to water of 60° or more.

The above glass and the glass contained in the above article may be the following embodiment.

In one embodiment, the total content of SiO₂, B₂O₃ and P₂O₅ (SiO₂ + B₂O₃ + P₂O₅) can be 10 to 35%, and the total content of ZnO, MgO, CaO, SrO, BaO, Y₂O₃, La₂O₃, Gd₂O₃, ZrO₂, TiO₂, Al₂O₃, Nb₂O₅, Ta₂O₅, WO₃, and Bi₂O₃ (ZnO + MgO + CaO + SrO + BaO + Y₂O₃ + La₂O₃ + Gd₂O₃ + ZrO₂ + TiO₂ + Al₂O₃ + Nb₂O₅ + Ta₂O₅ + WO₃ + Bi₂O₃) can be 55 to 85%.

In one embodiment, the SiO₂ content can be 1 to 8%, the B₂O₃ content can be 8 to 25%, the ZnO content can be 3 to 35%, the La₂O₃ content can be 15 to 45%, the ZrO₂ content can be 1 to 8%, the total content of SiO₂, B₂O₃ and P₂O₅ (SiO₂ + B₂O₃ + P₂O₅) can be 15 to 30%, and the total content of ZnO, MgO, CaO, SrO, BaO, Y₂O₃, La₂O₃, Gd₂O₃, ZrO₂, TiO₂, Al₂O₃, Nb₂O₅, Ta₂O₅, WO₃, and Bi₂O₃ (ZnO + MgO + CaO + SrO + BaO + Y₂O₃ + La₂O₃ + Gd₂O₃ + ZrO₂ + TiO₂ + Al₂O₃ + Nb₂O₅ + Ta₂O₅ + WO₃ + Bi₂O₃) can be 65 to 85%.

In one embodiment, the wetting angle of the above glass to water may be 80° or more.

In one embodiment, the water resistance Dw of the above glass can be grade 1.

In one embodiment, the Knoop hardness Hk of the above glass can be 450 or more or 550 or more.

In one embodiment, the mass reduction rate of the above glass in the powder method alkali resistance test can be 0.10 mass% or less.

The embodiments disclosed herein should be considered illustrative in all respects and not restrictive. The scope of the present invention is indicated by the claims rather than the above description, and is intended to be inclusive of all the changes within the scope and meaning equivalent to the claims.

For example, the glass according to one aspect of the present invention can be obtained by adjusting the composition described in the description with respect to the glass composition exemplified above.

In addition, it is of course possible to arbitrarily combine two or more of the matters described as examples, preferred ranges or embodiments in the description.

## Claims

1. A glass,
wherein glass used for optical elements selected from the group consisting of lenses and prisms and glass used for optical fibers are excluded from the glass, and
which has an oxide-basis glass composition based on a mass basis of:
a SiO₂ content of 0 to 25%,
a B₂O₃ content of 0 to 35%,
a P₂O₅ content of 0 to 30%,
a total content of SiO₂, B₂O₃, and P₂O₅ (SiO₂ + B₂O₃ + P₂O₅) of 10 to 45%,
an Al₂O₃ content of 0 to 15%,
a Li₂O content of 0 to 2%,
a Na₂O content of 0 to 10%,
a K₂O content of 0 to 10%,
a Rb₂O content of 0 to 5%,
a Cs₂O content of 0 to 5%,
a total content of Li₂O, Na₂O, K₂O, Rb₂O, and Cs₂O (Li₂O + Na₂O + K₂O + Rb₂O + Cs₂O) of 0 to 15%,
a MgO content of 0 to 20%,
a CaO content of 0 to 25%,
a SrO content of 0 to 25%,
a BaO content of 0 to 30%,
a ZnO content of 0 to 60%,
a La₂O₃ content of 0 to 50%,
an Y₂O₃ content of 0 to 15%,
a Gd₂O₃ content of 0 to 25%,
an Yb₂O₃ content of 0 to 10%,
a CeO₂ content of 0 to 10%,
a ZrO₂ content of 0 to 15%,
a TiO₂ content of 0 to 20%,
a SnO₂ content of 0 to 10%,
a Nb₂O₅ content of 0 to 30%,
a Ta₂O₅ content of 0 to 15%,
a WO₃ content of 0 to 15%,
a Bi₂O₃ content of 0 to 20%,
a Ga₂O₃ content of 0 to 5%,
an In₂O₃ content of 0 to 5%,
a GeO₂ content of 0 to 5%,
an Sb₂O₃ content of 0 to 1%,
a total content of ZnO, MgO, CaO, SrO, BaO, Y₂O₃, La₂O₃, Gd₂O₃, ZrO₂, TiO₂, Al₂O₃, Nb₂O₅, Ta₂O₅, WO₃, and Bi₂O₃ (ZnO + MgO + CaO + SrO + BaO + Y₂O₃ + La₂O₃ + Gd₂O₃ + ZrO₂ + TiO₂ + Al₂O₃ + Nb₂O₅ + Ta₂O₅ + WO₃ + Bi₂O₃) of 55 to 90%,
an Fe₂O₃ content of 0 to 10%,
a total content of V₂O₅, Cr₂O₃, MnO₂, Co₂O₃, NiO, CuO, MoO, Au₂O₃ and Ag₂O (V₂O₅ + Cr₂O₃ + MnO₂ + Co₂O₃ + NiO + CuO + MoO + Au₂O₃ + Ag₂O) of 0 to 3%, and
has a wetting angle to water of 60° or more.

2. The glass according to claim 1,
wherein the total content of SiO₂, B₂O₃ and P₂O₅ (SiO₂ + B₂O₃ + P₂O₅) is 10 to 35%, and the total content of ZnO, MgO, CaO, SrO, BaO, Y₂O₃, La₂O₃, Gd₂O₃, ZrO₂, TiO₂, Al₂O₃, Nb₂O₅, Ta₂O₅, WO₃, and Bi₂O₃ (ZnO + MgO + CaO + SrO + BaO + Y₂O₃ + La₂O₃ + Gd₂O₃ + ZrO₂ + TiO₂ + Al₂O₃ + Nb₂O₅ + Ta₂O₅ + WO₃ + Bi₂O₃) is 55 to 85%.

3. The glass according to claim 1 or 2,
wherein
the SiO₂ content is 1 to 8%,
the B₂O₃ content is 8 to 25%,
the ZnO content is 3 to 35%,
the La₂O₃ content is 15 to 45%,
the ZrO₂ content is 1 to 8%,
the total content of SiO₂, B₂O₃ and P₂O₅ (SiO₂ + B₂O₃ + P₂O₅) is 15 to 30%, and
the total content of ZnO, MgO, CaO, SrO, BaO, Y₂O₃, La₂O₃, Gd₂O₃, ZrO₂, TiO₂, Al₂O₃, Nb₂O₅, Ta₂O₅, WO₃, and Bi₂O₃ (ZnO + MgO + CaO + SrO + BaO + Y₂O₃ + La₂O₃ + Gd₂O₃ + ZrO₂ + TiO₂ + Al₂O₃ + Nb₂O₅ + Ta₂O₅ + WO₃ + Bi₂O₃) is 65 to 85%.

4. The glass according to any of claims 1 to 3,
which has a wetting angle to water of 80° or more.

5. The glass according to any of claims 1 to 4,
which has a water resistance Dw of grade 1.

6. The glass according to any of claims 1 to 5,
which has a Knoop hardness Hk of 450 or more.

7. The glass according to any of claims 1 to 6,
which has a Knoop hardness Hk of 550 or more.

8. The glass according to any of claims 1 to 7,
wherein a mass reduction rate in a powder method alkali resistance test is 0.10 mass% or less.

9. An article comprising a glass,
wherein the article is selected from the group consisting of window materials, windshields, cover glass, mirrors, tableware, laboratory equipment, cooking utensils, washbasins, toilet bowls, tombstones, accessories, handicrafts, glass fibers, and glass fiber moldings,
the glass has an oxide-basis glass composition based on a mass basis of:
a SiO₂ content of 0 to 25%,
a B₂O₃ content of 0 to 35%,
a P₂O₅ content of 0 to 30%,
a total content of SiO₂, B₂O₃, and P₂O₅ (SiO₂ + B₂O₃ + P₂O₅) of 10 to 45%,
an Al₂O₃ content of 0 to 15%,
a Li₂O content of 0 to 2%,
a Na₂O content of 0 to 10%,
a K₂O content of 0 to 10%,
a Rb₂O content of 0 to 5%,
a Cs₂O content of 0 to 5%,
a total content of Li₂O, Na₂O, K₂O, Rb₂O, and Cs₂O (Li₂O + Na₂O + K₂O + Rb₂O + Cs₂O) of 0 to 15%,
a MgO content of 0 to 20%,
a CaO content of 0 to 25%,
a SrO content of 0 to 25%,
a BaO content of 0 to 30%,
a ZnO content of 0 to 60%,
a La₂O₃ content of 0 to 50%,
an Y₂O₃ content of 0 to 15%,
a Gd₂O₃ content of 0 to 25%,
an Yb₂O₃ content of 0 to 10%,
a CeO₂ content of 0 to 10%,
a ZrO₂ content of 0 to 15%,
a TiO₂ content of 0 to 20%,
a SnO₂ content of 0 to 10%,
a Nb₂O₅ content of 0 to 30%,
a Ta₂O₅ content of 0 to 15%,
a WO₃ content of 0 to 15%,
a Bi₂O₃ content of 0 to 20%,
a Ga₂O₃ content of 0 to 5%,
an In₂O₃ content of 0 to 5%,
a GeO₂ content of 0 to 5%,
an Sb₂O₃ content of 0 to 1%,
a total content of ZnO, MgO, CaO, SrO, BaO, Y₂O₃, La₂O₃, Gd₂O₃, ZrO₂, TiO₂, Al₂O₃, Nb₂O₅, Ta₂O₅, WO₃, and Bi₂O₃ (ZnO + MgO + CaO + SrO + BaO + Y₂O₃ + La₂O₃ + Gd₂O₃ + ZrO₂ + TiO₂ + Al₂O₃ + Nb₂O₅ + Ta₂O₅ + WO₃ + Bi₂O₃) of 55 to 90%,
an Fe₂O₃ content of 0 to 10%,
a total content of V₂O₅, Cr₂O₃, MnO₂, Co₂O₃, NiO, CuO, MoO, Au₂O₃ and Ag₂O (V₂O₅ + Cr₂O₃ + MnO₂ + Co₂O₃ + NiO + CuO + MoO + Au₂O₃ + Ag₂O) of 0 to 3%, and
has a wetting angle to water of 60° or more.

10. The article according to claim 9,
wherein, in the glass, the total content of SiO₂, B₂O₃ and P₂O₅ (SiO₂ + B₂O₃ + P₂O₅) is 10 to 35%, and the total content of ZnO, MgO, CaO, SrO, BaO, Y₂O₃, La₂O₃, Gd₂O₃, ZrO₂, TiO₂, Al₂O₃, Nb₂O₅, Ta₂O₅, WO₃, and Bi₂O₃ (ZnO + MgO + CaO + SrO + BaO + Y₂O₃ + La₂O₃ + Gd₂O₃ + ZrO₂ + TiO₂ + Al₂O₃ + Nb₂O₅ + Ta₂O₅ + WO₃ + Bi₂O₃) is 55 to 85%.

11. The article according to claim 9 or 10,
Wherein, in the glass,
the SiO₂ content is 1 to 8%,
the B₂O₃ content is 8 to 25%,
the ZnO content is 3 to 35%,
the La₂O₃ content is 15 to 45%,
the ZrO₂ content is 1 to 8%,
the total content of SiO₂, B₂O₃ and P₂O₅ (SiO₂ + B₂O₃ + P₂O₅) is 15 to 30%, and
the total content of ZnO, MgO, CaO, SrO, BaO, Y₂O₃, La₂O₃, Gd₂O₃, ZrO₂, TiO₂, Al₂O₃, Nb₂O₅, Ta₂O₅, WO₃, and Bi₂O₃ (ZnO + MgO + CaO + SrO + BaO + Y₂O₃ + La₂O₃ + Gd₂O₃ + ZrO₂ + TiO₂ + Al₂O₃ + Nb₂O₅ + Ta₂O₅ + WO₃ + Bi₂O₃) is 65 to 85%.

12. The article according to any of claims 9 to 11,
wherein the glass has a wetting angle to water of 80° or more.

13. The article according to any of claims 9 to 12,
wherein the glass has a water resistance Dw of grade 1.

14. The article according to any of claims 9 to 13,
wherein the glass has a Knoop hardness Hk of 450 or more.

15. The article according to any of claims 9 to 14,
wherein the glass has a Knoop hardness Hk of 550 or more.

16. The article according to any of claims 9 to 15,
wherein a mass reduction rate of the glass in a powder method alkali resistance test is 0.10 mass% or less.
